# FASCICULE DE BREVET EUROPEEN

(11) **EP 2 616 313 B1**
(45) Date de publication et mention de la délivrance du brevet: **11.06.2014**
(21) Numéro de dépôt: 11761667.2
(22) Date de dépôt: 24.08.2011
(51) Int. Cl.: B62D 25/12, E05D 5/02, E05D 5/06

(54) **CHARNIERE D'ARTICULATION D'UN CAPOT DE VEHICULE AUTOMOBILE**
SCHARNIER EINER MOTORHAUBE EINES KRAFTFAHRZEUGES
HOOD HINGE FOR A MOTOR VEHICLE

(30) Priorité: 17.09.2010 FR 1057454
(43) Date de publication de la demande: 24.07.2013
(73) Titulaire: Peugeot Citroën Automobiles SA, 78140 Vélizy Villacoublay (FR)
(72) Inventeur: BENANE, Said, F-94550 Chevilly Larue (FR)
(74) Mandataire: Fosse, Danièle
(86) Numéro de dépôt international: PCT/FR2011/051963
(87) Numéro de publication internationale: WO 2012/035230

(56) Documents cités:
- US-A1- 2009 188 081

## Description

La présente invention se rapporte à une charnière d'articulation d'un capot de véhicule automobile, à un capot équipé d'une telle charnière et à un véhicule équipé d'un tel capot.

Elle se rapporte plus particulièrement à une charnière d'articulation comportant un charnon fixe et un charnon mobile articulés l'un par rapport à l'autre autour d'un axe de pivotement, le charnon mobile étant destiné à être fixé sur le capot et le charnon fixe présentant une embase destinée à être fixée sur un élément de structure fixe du véhicule.

La plupart des véhicules automobiles comportent un capot articulé dans sa partie arrière à la structure du véhicule par une telle charnière d'articulation. De manière usuelle, le capot est articulé sur la structure du véhicule au moyen de deux charnières d'articulation disposées respectivement sur la droite et la gauche du capot, lesdites charnières d'articulation étant rapportées sur des éléments de carrosserie comme par exemple les doublures d'aile avant. Le document US 2009/188081 montre une charnière selon le préambule de la revendication 1.

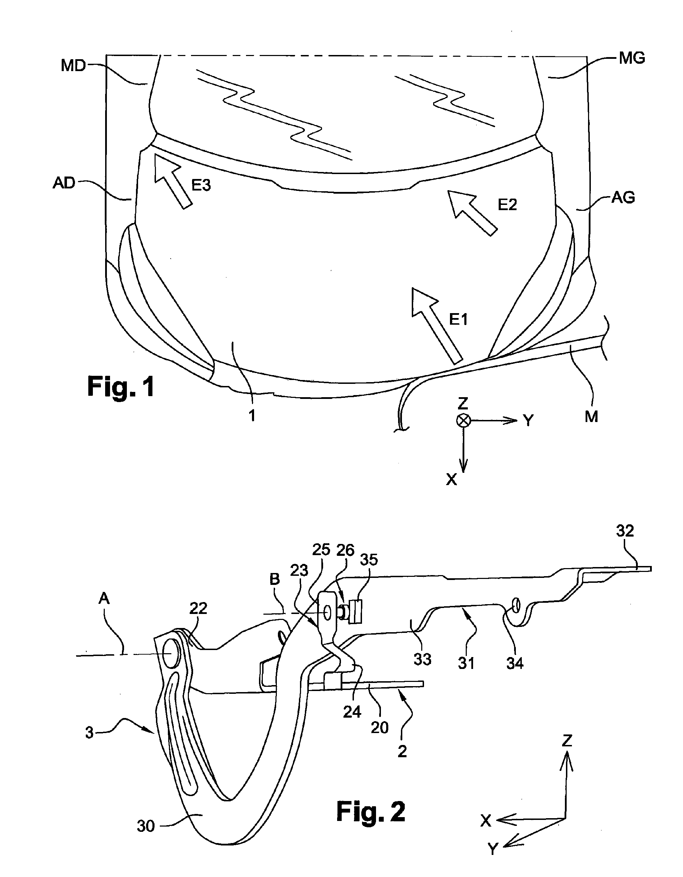

La figure 1 illustre la partie avant d'un tel véhicule automobile comportant un capot 1 avant monté de manière à obturer un compartiment recevant notamment le groupe motopropulseur non visible ; ledit capot 1 étant disposé dans la continuité du pare-brise P encadré par deux montants de baie droit MD et gauche MG, et entre les deux ailes avant droite AD et gauche AG du véhicule, ces ailes avant étant des éléments de carrosserie faisant partie de la structure du véhicule.

La conception d'un véhicule automobile doit aujourd'hui répondre à de nombreuses réglementations et doit subir des procédures d'essai, parmi lesquelles les essais de choc frontal à faible vitesse au niveau de la réparabilité. Ce choc frontal dit de réparabilité permet d'estimer le coût des réparations sur le véhicule testé, lorsque ce dernier percute frontalement un mur M rigide à faible vitesse de l'ordre de 16 kilomètres/heure.

La figure 1 illustre un tel essai de choc frontal de réparabilité avec un véhicule roulant à basse vitesse, par exemple à environ 16 kilomètres/heure, et venant percuter sur le côté avant, en l'occurrence le côté avant gauche sur la figure 1, un mur M rigide incliné selon un angle de 10° par rapport au plan transversal (YZ) du véhicule, avec environ 40 % de recouvrement du mur M sur la largeur du véhicule. Lors de l'impact de l'avant du mur M piéton sur l'avant du véhicule, il se produit un enfoncement du capot 1 au niveau de la zone de choc, comme illustré par la flèche E1, qui se propage avec un enfoncement E2 sur la zone arrière gauche du capot 1 et surtout un enfoncement E3 sur la zone arrière droite du capot 1, à l'opposé du choc. Cet enfoncement ou déplacement E3 du capot 1 est susceptible de provoquer des dégâts sur l'aile avant droite AD du véhicule, et plus spécifiquement sur la doublure de l'aile avant droite AD où est fixé le charnon fixe de la charnière.

Dans le cas notamment d'un capot 1 long poussé lors d'un tel choc réparabilité, on observe un chargement sur l'aile avant droite AD provoqué par le transfert d'effort d'enfoncement dans la diagonale du capot 1, avec pour conséquence une déformation de la portière latérale avant droite du véhicule et/ou du montant de baie droit MD.

La présente invention a pour but de résoudre cet inconvénient en proposant une charnière d'articulation qui permette de limiter l'enfoncement ou déplacement du capot lors d'un tel choc frontal de réparabilité, et plus spécifiquement de limiter suffisamment son déplacement pour éviter d'impacter l'aile avant opposée à la zone de choc (aile avant droite AD sur la figure 1), et par conséquence d'impacter la portière latérale avant et/ou le montant de baie adjacents à ladite aile avant.

A cet effet, elle propose une charnière d'articulation d'un capot de véhicule automobile, du type comportant un charnon fixe et un charnon mobile articulés l'un par rapport à l'autre autour d'un axe de pivotement entre une position ouverte et une position fermée, ledit charnon mobile étant destiné à être fixé sur le capot et ledit charnon fixe présentant une embase destinée à être fixée sur un élément de structure fixe du véhicule, ladite charnière étant remarquable en ce que le charnon fixe présente une patte faisant saillie de ladite embase et pourvue d'une partie d'extrémité libre sur laquelle est fixé un pion, ledit pion venant en regard d'un orifice ménagé dans le charnon mobile à une distance prédéterminée dudit orifice dans la position fermée de la charnière.

Ainsi, lors d'un choc réparabilité sur le véhicule, le pion solidaire du charnon fixe s'introduit à l'intérieur de l'orifice prévu sur le charnon mobile, limitant ainsi le déplacement du charnon mobile et par conséquent le déplacement du capot sur lequel est solidarisé le charnon mobile.

Selon une caractéristique, l'orifice est ménagé dans une paroi du charnon mobile sensiblement perpendiculaire à l'axe de pivotement, la partie d'extrémité libre de la patte s'étend sensiblement parallèlement à ladite paroi, et le pion fait saillie perpendiculairement à ladite partie d'extrémité libre de sorte que ledit pion s'étend selon un axe principal parallèle à l'axe de pivotement.

Cette configuration est particulièrement avantageuse pour limiter le déplacement du charnon mobile, et par conséquent du capot, à la fois dans la direction verticale et la direction transversale du véhicule.

Selon une autre caractéristique, le pion présente une portion proximale fixée sur la patte, une portion distale libre et une portion centrale intercalée entre lesdites portions proximale et distale, où la portion centrale présente une moindre épaisseur par rapport aux portions proximale et distale.

De cette manière, le pion assure un bon guidage du charnon mobile, en particulier selon la direction verticale, et ne risque pas de s'extraire hors de l'orifice lors de l'enfoncement du capot provoqué par le choc.

Par exemple, le pion présente une symétrie de révolution autour de l'axe principal et la portion centrale présente un diamètre réduit par rapport aux portions proximale et distale.

De façon avantageuse, la patte est pourvue d'une partie de base fixée sur l'embase du charnon fixe et prolongée par la partie d'extrémité libre, ladite partie de base présentant une zone de moindre résistance.

Ainsi, cette zone de moindre résistance est permet de limiter la déformation de la patte lors du choc, en particulier selon la direction verticale, et donc d'éviter de déformer les pièces du véhicule situées sous la charnière. Autrement dit, cette zone de moindre résistance permet de maitriser l'effort de façon linéaire sans déformer les pièces fixées sous la charnière comme la doublure de l'aile avant dont l'épaisseur est relativement faible.

Dans une réalisation particulière, la zone de moindre résistance est réalisée sous la forme d'une zone de la partie de base qui présente une forme générale incurvée, notamment en « U », par rapport au plan défini par la partie d'extrémité libre.

Ainsi, lors du déplacement ou enfoncement du capot, cette zone incurvée s'écrase sur elle-même ; cet écrasement étant favorisé par la forme incurvée de la partie de base de la patte.

Dans un mode de réalisation particulier, la patte est réalisée à partir d'une pièce plate ensuite déformée pour présenter un profil successivement incurvée dans la partie de base et plat dans la partie d'extrémité libre.

L'invention se rapporte également à un capot de véhicule automobile équipé d'au moins une charnière d'articulation conforme à l'invention, le charnon mobile de la ou chaque charnière étant fixée sur ledit capot.

L'invention concerne aussi un véhicule automobile comprenant un tel capot.

Dans une configuration avantageuse, l'axe de pivotement de la charnière s'étend parallèlement à l'axe transversal du véhicule, l'embase du charnon fixe s'étend sensiblement horizontalement, l'orifice est ménagé dans une paroi du charnon mobile sensiblement verticale et la patte fait saillie verticalement de l'embase du charnon mobile

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique de dessus de l'avant d'un véhicule automobile en situation de choc réparabilité ;
- la figure 2 est une vue schématique en perspective d'une charnière conforme à l'invention ;
- la figure 3 est une vue schématique en perspective du charnon fixe de la charnière de la figure 2 ; et
- la figure 4 est une vue schématique et partielle de face de la charnière de la figure 2.

Afin de simplifier la description qui va suivre, les figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position, de direction et d'orientation qui sont utilisés par la suite s'entendent par rapport à ce système d'axes.

L'invention concerne une charnière d'articulation d'un capot 1 de véhicule automobile monté sur la structure du véhicule, et en particulier sur une doublure d'aile avant AD, AG. Un véhicule peut notamment comprendre deux charnières d'articulation fixées de chaque côté de la structure avant du véhicule, c'est-à-dire sur les doublures d'aile avant respectivement droite AD et gauche AG du véhicule.

La charnière d'articulation peut ainsi être fixée sur une doublure d'aile avant, en particulier via un support de charnière (non illustré) sur lequel est fixée la charnière d'articulation ; ce support de charnière étant par ailleurs fixé sur la doublure d'aile avant.

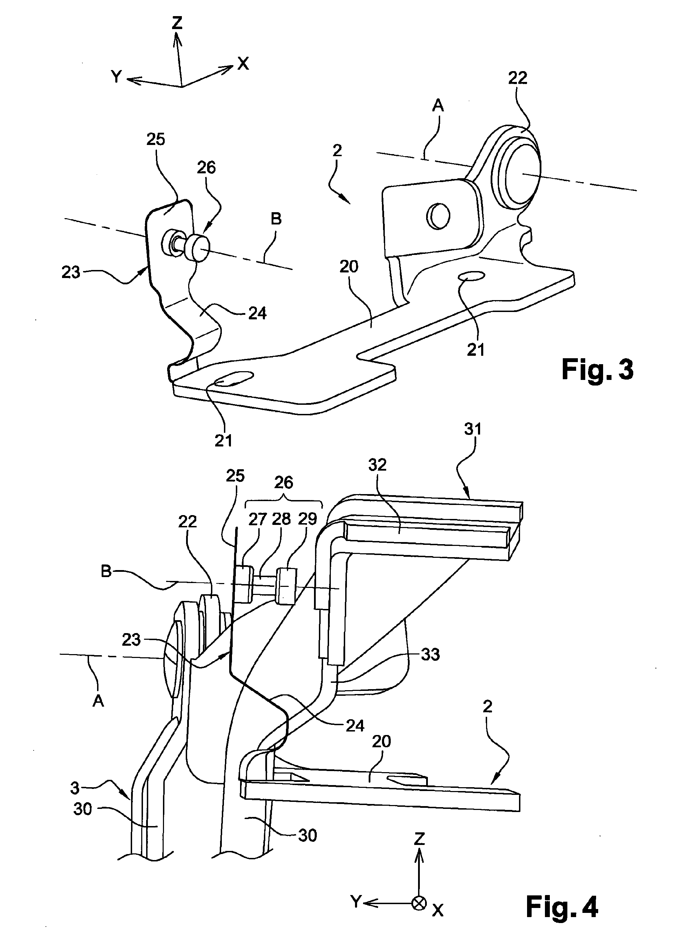

Les figures 2 à 4 illustrent une charnière conforme à l'invention, du type comportant un charnon fixe 2 et un charnon mobile 3 articulés l'un par rapport à l'autre autour d'un axe de pivotement A entre une position ouverte et une position fermée (visible sur les figures 2 et 4) ; cet axe de pivotement A s'étendant selon la direction transversale Y du véhicule.

Toutes les configurations ou positions définies ci-après le sont pour la charnière occupant sa position fermée, avec le capot rabattu et fermé.

Le charnon fixe 2 est fixé sur le support de charnière et comporte une embase 20 destinée à être fixée sur le support de charnière, et donc sur la doublure d'aile avant. L'embase 20 s'étend sensiblement dans un plan horizontal (XY) et étant pourvue d'orifices 21 permettant d'assurer sa fixation par vissage ou similaire.

Le charnon fixe 2 comporte un flasque 22 latéralement rabattu à angle droit par rapport à l'embase 20 et sur lequel est articulé le charnon mobile 3. Le flasque 22 s'étend sensiblement dans un plan (XZ) vertical et longitudinal du véhicule. Le flasque 22 est disposé en partie avant de l'embase 20, c'est-à-dire du côté avant du véhicule à l'opposé du pare-brise P.

Le charnon fixe 2 comporte également une patte 23 faisant saillie de l'embase 20, et plus particulièrement de la face supérieure de l'embase 20 située en regard du capot. La patte 23 s'étend sensiblement dans un plan (XZ) vertical et longitudinal du véhicule. La patte 23 est disposée en partie arrière de l'embase 20, c'est-à-dire du côté arrière du véhicule à l'opposé du pare-choc avant.

La patte 23 présente les deux parties successives suivantes :
- une partie de base 24 fixée sur l'embase 20 et faisant saillie verticalement de l'embase 20, autrement dit de manière perpendiculaire à l'embase 20 ; et
- une partie d'extrémité libre 25 venant dans le prolongement de la partie de base 24 et s'étendant dans un plan parallèle au plan (XZ) vertical et longitudinal du véhicule.

Comme visible sur la figure 4, la patte 23 est réalisée à partir d'une pièce plate ensuite déformée pour présenter un profil successivement incurvée dans la partie de base 24, et plat dans la partie d'extrémité libre 25.

Ainsi, la partie de base 24 présente une zone de forme générale incurvée en « U » par rapport au plan vertical (XZ) défini par la partie d'extrémité libre 25 ; cette zone incurvée formant une zone de moindre résistance de la partie de base 24. La patte 23 peut ainsi présenter une forme globalement et approximativement en « S », et cette patte 23 est déformable.

Le charnon fixe 2 comporte aussi un pion 26 fixé sur la partie d'extrémité libre 25 de la patte 23, et plus spécifiquement faisant saillie perpendiculairement à la partie d'extrémité libre 25 de sorte que ce pion 26 s'étend selon un axe principal B parallèle à l'axe de pivotement A et à la direction transversale Y du véhicule.

Comme visible sur la figure 4, le pion 26 présente une symétrie de révolution autour de l'axe principal B et comporte les portions successives suivantes :
- une portion proximale 27 fixée sur la patte 23 et de forme cylindrique d'axe B, avec un premier diamètre ;
- une portion centrale 28 venant dans le prolongement de la portion proximale 27 et de forme cylindrique d'axe B, avec un second diamètre inférieur au premier diamètre ;
- une portion distale 29 libre venant dans le prolongement de la portion centrale 28, de sorte que cette portion centrale 28 intercalée entre les portions proximale 27 et distale 29, la portion distale 29 étant de forme cylindrique d'axe B, avec un premier diamètre équivalent à celui de la portion proximale 27 et donc supérieur à celui de la portion centrale 28.

Ainsi, ce pion 26 présente un épaulement et on parle alors de pion épaulé. Ce pion 26 peut par exemple être réalisé en métal et soudé sur la patte 23 réalisée en métal.

Le charnon mobile 3 est fixé sur le capot et comporte une partie avant 30 sur laquelle est articulé le charnon fixe 2, et plus spécifiquement le flasque 22. Cette partie avant 30 s'étend sensiblement dans un plan (XZ) vertical et longitudinal du véhicule, et présente une forme globale d'arche en « U »,

Le charnon mobile 3 comporte une partie arrière 31 qui prolonge la partie avant 30 et qui est destinée à être fixée sur le capot. Cette partie arrière 30 présente deux parois contigües et orthogonales, à savoir :
- une première paroi 32 horizontale, c'est-à-dire parallèle au plan (XY), qui présente des orifices (non visibles) pour la fixation du charnon mobile 3 sur le capot par vissage ou similaire ; et
- une seconde paroi 33 verticale, qui s'étend dans un plan (XZ) vertical et longitudinal du véhicule, et présentant également un orifice 34 pour la fixation du charnon mobile 3 sur le capot par vissage ou similaire.

La seconde paroi 34 présente un autre orifice 35 et dont la fonction est décrite ci-après. Cet orifice est de forme sensiblement rectangulaire ; mais d'autres formes sont bien entendu envisageables.

Dans la position fermée de la charnière, le pion 26 vient en regard de l'orifice 35 rectangulaire ménagé dans la seconde paroi 33 du charnon mobile 3. Le pion 26 se situe à une distance prédéterminée de cette seconde paroi 33 et donc de cet orifice 35 dans la position fermée de la charnière. Pour remarque, la partie d'extrémité libre 25 de la patte 23 s'étend sensiblement parallèlement à la seconde paroi 33 du charnon mobile 3, avec un écartement suffisant pour que pion 26 ne soit pas engagé dans l'orifice 35 est se maintienne à la distance prédéterminée de cet orifice 35.

Le fonctionnement de la charnière en situation de choc frontal sur le véhicule, et notamment de choc frontal de réparabilité, est décrit ci-après. On s'intéresse plus spécifiquement au comportement de la charnière qui se situe sur le côté opposé au choc, comme par exemple la charnière de droite dans le cas illustré sur la figure 1 où le choc frontal se produit sur le côté avant gauche du véhicule.

Le but de l'invention est de limiter le déplacement du capot par l'intermédiaire de la charnière en limitant son déplacement dans les directions verticale Z et transversale Y. Pour cela, le charnon fixe 2 dispose du pion 26 épaulé pour venir s'indexer sur l'orifice 35 en vis-à-vis, et ce pion 26 est soudé sur la patte 23 déformable en forme de « S » pour limiter sa déformation selon la direction verticale Z et ainsi éviter de déformer les pièces se trouvant sous la charnière.

Lors du choc frontal, le charnon mobile 3 vient se déplacer selon la direction transversale sous la poussée du capot en laissant pénétrer le pion 26 épaulé dans l'orifice 35 réalisé dans ce charnon mobile 3, puis le charnon mobile se lève dans la direction verticale Z et entraine le pion 26 épaulé qui assure un bon guidage vertical grâce à la réduction cylindrique prévue dans sa portion centrale 28.

Ensuite, le pion 26 épaulé vient créer un effort de traction sur la patte 23 en forme de « S » qui permet de maitriser l'effort de façon linéaire sans déformer les pièces fixées sous la charnière, comme par exemple la doublure d'aile avant sur laquelle est fixé le charnon fixe 2.

Ainsi, cette charnière permet d'éviter d'impacter le montant de baie droit, l'aile avant droite et aussi de préserver la doublure d'aile avant droite en cas choc réparabilité sur le côté avant gauche du véhicule (et inversement en cas de choc réparabilité sur le côté avant droit du véhicule) et donc de réduire les coûts des pièces de rechange ainsi que le temps de réparation du véhicule.

Bien entendu l'exemple de mise en oeuvre évoqué ci-dessus ne présente aucun caractère limitatif et d'autres améliorations et détails peuvent être apportés à la charnière selon l'invention, sans pour autant sortir du cadre de l'invention où d'autres formes de patte et/ou de pion et/ou d'orifice peuvent par exemple être réalisées.

## Revendications

1. Charnière d'articulation d'un capot (1) de véhicule automobile, du type comportant un charnon fixe (2) et un charnon mobile (3) articulés l'un par rapport à l'autre autour d'un axe de pivotement (A) entre une position ouverte et une position fermée, ledit charnon mobile (3) étant destiné à être fixé sur le capot (1) et ledit charnon fixe (2) présentant une embase (20) destinée à être fixée sur un élément de structure fixe (AD; AG) du véhicule, ladite charnière étant **caractérisée en ce que** le charnon fixe (2) présente une patte (23) faisant saillie de ladite embase (20) et pourvue d'une partie d'extrémité libre (25) sur laquelle est fixé un pion (26), ledit pion (26) venant en regard d'un orifice (35) ménagé dans le charnon mobile (3) à une distance prédéterminée dudit orifice (35) dans la position fermée de la charnière, le pion solidaire du charnon fixe étant apte à s'introduire à l'intérieur de l'orifice prévu sur le charnon mobile, lors d'un choc réparabilité sur le véhicule.

2. Charnière selon la revendication 1, dans laquelle l'orifice (35) est ménagé dans une paroi (33) du charnon mobile (3) sensiblement perpendiculaire à l'axe de pivotement (A), la partie d'extrémité libre (25) de la patte (23) s'étend sensiblement parallèlement à ladite paroi (33), et le pion (26) fait saillie perpendiculairement à ladite partie d'extrémité libre (25) de sorte que ledit pion (26) s'étend selon un axe principal (B) parallèle à l'axe de pivotement (A).

3. Charnière selon les revendications 1 ou 2, dans laquelle le pion (26) présente une portion proximale (27) fixée sur la patte (23), une portion distale (29) libre et une portion centrale (28) intercalée entre lesdites portions proximale (27) et distale (29), où la portion centrale (28) présente une moindre épaisseur par rapport aux portions proximale (27) et distale (29).

4. Charnière selon la revendication 3, dans laquelle le pion (26) présente une symétrie de révolution autour de l'axe principal, la portion centrale (28) présentant un diamètre réduit par rapport aux portions proximale (27) et distale (29).

5. Charnière selon l'une quelconque des revendications 1 à 4, dans laquelle la patte (23) est pourvue d'une partie de base (24) fixée sur l'embase (20) du charnon fixe (2) et prolongée par la partie d'extrémité libre (25), ladite partie de base (24) présentant une zone de moindre résistance.

6. Charnière selon la revendication 5, dans laquelle la zone de moindre résistance est réalisée sous la forme d'une zone de la partie de base (24) qui présente une forme générale incurvée, notamment en « U », par rapport au plan défini par la partie d'extrémité libre (25).

7. Charnière selon la revendication 6, dans laquelle la patte (23) est réalisée à partir d'une pièce plate ensuite déformée pour présenter un profil successivement incurvée dans la partie de base (24) et plat dans la partie d'extrémité libre (25).

8. Capot (1) de véhicule automobile équipé d'au moins une charnière d'articulation conforme à l'une quelconque des revendications 1 à 7, le charnon mobile (3) de la ou chaque charnière étant fixée sur ledit capot (1).

9. Véhicule automobile comprenant un capot (1) conforme à la revendication 8.

10. Véhicule selon la revendication 9, dans lequel l'axe de pivotement (A) de la charnière s'étend parallèlement à l'axe transversal (Y) du véhicule, l'embase (20) du charnon fixe (2) s'étend sensiblement horizontalement, l'orifice (35) est ménagé dans une paroi (33) du charnon mobile (3) sensiblement verticale et la patte (23) fait saillie verticalement de l'embase (20) du charnon mobile (3).

## Patentansprüche

1. Anlenkscharnier einer Motorhaube (1) eines Kraftfahrzeugs des Typs, der ein stationäres Scharnierteil (2) und ein bewegliches Scharnierteil (3) aufweist, die zueinander um eine Schwenkachse (A) zwischen einer offenen Position und einer geschlossenen Position angelenkt sind, wobei das bewegliche Scharnierteil (3) dazu bestimmt ist, auf der Motorhaube (1) befestigt zu sein, und das stationäre Scharnierteil (2) eine Grundplatte (20) aufweist, die dazu bestimmt ist, auf einem stationären Strukturelement (AD; AG) des Kraftfahrzeugs befestigt zu sein, wobei das Scharnier **dadurch gekennzeichnet ist, dass** das stationäre Scharnierteil (2) eine Pratze (23) aufweist, die von der Grundplatte (20) vorsteht und mit einem freien Endteil (25) versehen ist, auf dem ein Zapfen (26) befestigt ist, wobei der Zapfen (26) einer Öffnung (35), die in dem beweglichen Scharnierteil (3) in einer vorbestimmten Entfernung von der Öffnung (35) eingerichtet ist, in der geschlossenen Position des Scharniers zum Gegenüberliegen kommt, wobei der Zapfen, der fest mit dem stationären Scharnierteil verbunden ist, geeignet ist, sich in das Innere der Öffnung, die auf dem beweglichen Scharnierteil vorgesehen ist, bei einem Reparierbarkeitsstoß auf dem Fahrzeug einzufügen.

2. Scharnier nach Anspruch 1, bei dem die Öffnung (35) in einer Wand (33) des beweglichen Scharnierteils (3) im Wesentlichen senkrecht zu der Schwenkachse (A) eingerichtet ist, wobei sich der freie Endteil (25) der Pratze (23) im Wesentlichen parallel zu der Wand (33) erstreckt, und der Zapfen (26) senkrecht zu dem freien Endteil (25) derart vorsteht, dass sich der Zapfen (26) entlang einer Hauptachse (B) parallel zu der Schwenkachse (A) erstreckt.

3. Scharnier nach den Ansprüche 1 oder 2, bei dem der Zapfen (26) einen proximalen Teil (27), der auf der Pratze (23) befestigt ist, einen freien distalen Teil (29) und einen zentralen Teil (28), der zwischen den proximalen Teil (27) und den distalen Teil (29) eingefügt ist, aufweist, wo der zentrale Teil (28) eine geringere Stärke aufweist als der proximale (27) und der distale Teil (29).

4. Scharnier nach Anspruch 3, bei dem der Zapfen (26) eine Rotationssymmetrie um die Hauptachse aufweist, wobei der zentrale Teil (28) einen im Vergleich zu dem proximalen Teil (27) und dem distalen Teil (29) verringerten Durchmesser aufweist.

5. Scharnier nach einem der Ansprüche 1 bis 4, bei dem die Pratze (23) mit einem Basisteil (24) versehen ist, der auf der Grundplatte (20) des stationären Scharnierteils (2) befestigt ist und durch den freien Endteil (25) verlängert ist, wobei der Basisteil (24) einen Bereich mit geringerer Festigkeit aufweist.

6. Scharnier nach Anspruch 5, bei dem der Bereich mit geringerer Festigkeit in der Form eines Bereichs des Basisteils (24) ausgeführt ist, der eine allgemein gekrümmte Form, insbesondere in "U"-Form, im Vergleich zu der Ebene aufweist, die in dem freien Endteil (25) definiert ist.

7. Scharnier nach Anspruch 6, bei dem die Pratze (23) ausgehend von einem flachen Teil hergestellt ist, das anschließend verformt wird, um ein nacheinander in dem Basisteil (24) gekrümmtes Profil und in dem freien Endteil (25) flaches Profil aufzuweisen.

8. Motorhaube (1) eines Kraftfahrzeugs, die mit mindestens einem Anlenkscharnier nach einem der Ansprüche 1 bis 7 ausgerüstet ist, wobei das bewegliche Scharnierteil (3) des oder jedes Scharniers auf der Motorhaube (1) befestigt ist.

9. Kraftfahrzeug, das eine Motorhaube (1) nach Anspruch 8 aufweist.

10. Kraftfahrzeug nach Anspruch 9, bei dem sich die Schwenkachse (A) des Scharniers parallel zu der Querachse (Y) des Fahrzeugs erstreckt, wobei sich die Grundplatte (20) des stationären Scharnierteils (2) im Wesentlichen horizontal erstreckt, die Öffnung (35) in einer Wand (33) des beweglichen Scharnierteils (3), das im Wesentlichen vertikal ist, eingerichtet ist, und die Pratze (23) vertikal von der Grundplatte (20) des beweglichen Scharnierteils (3) vorsteht.

## Claims

1. A hinge for articulating a bonnet (1) of a motor vehicle, of the type comprising a fixed hinge knuckle (2) and a moving hinge knuckle (3) which are articulated one with respect to the other about a pivoting axis (A) between an open position and a closed position, the said moving hinge knuckle (3) being intended to be fixed on the bonnet (1) and the said fixed hinge knuckle (2) having a base (20) intended to be fixed on a fixed structural element (AD; AG) of the vehicle, the said hinge being **characterized in that** the fixed hinge knuckle (2) has a tab (23) projecting from the said base (20) and provided with a free end part (25) on which a pin (26) is fixed, the said pin (26) coming to be facing an orifice (35) arranged in the moving hinge knuckle (3) at a predetermined distance from the said orifice (35) in the closed position of the hinge, the pin integral with the fixed hinge knuckle being able to be introduced into the interior of the orifice provided on the moving hinge knuckle during a repairability impact on the vehicle.

2. The hinge according to claim 1, in which the orifice (35) is arranged in a wall (33) of the moving hinge knuckle (3) substantially perpendicular to the pivoting axis (A), the free end part (25) of the tab (23) extends substantially parallel to the said wall (33), and the pin (26) projects perpendicularly to the said free end part (25) such that the said pin (26) extends along a main axis (B) parallel to the pivoting axis (A).

3. The hinge according to claims 1 or 2, in which the pin (26) has a proximal portion (27) fixed on the tab (23), a free distal portion (29) and a central portion (28) intercalated between the said proximal (27) and distal (29) portions, where the central portion (28) has a lesser thickness with respect to the proximal (27) and distal (29) portions.

4. The hinge according to claim 3, in which the pin (26) has a rotational symmetry about the main axis, the central portion (28) having a reduced diameter with respect to the proximal (27) and distal (29) portions.

5. The hinge according to any one of claims 1 to 4, in which the tab (23) is provided with a base part (24) fixed on the base (20) of the fixed hinge knuckle (2) and extended by the free end part (25), the said base part (24) having a zone of least resistance.

6. The hinge according to claim 5, in which the zone of least resistance is realized in the form of a zone of the base part (24) which has a generally incurved shaped, in particular in a U-shape, with respect to the plane defined by the free end part (25).

7. The hinge according to claim 6, in which the tab (23) is realized from a flat piece, then deformed to present a successively incurved profile in the base part (24) and flat in the free end part (25).

8. A bonnet (1) of a motor vehicle equipped with at least one articulation hinge according to any one of claims 1 to 7, the moving hinge knuckle (3) of the or each hinge being fixed on the said bonnet (1).

9. A motor vehicle including a bonnet (1) according to claim 8.

10. The vehicle according to claim 9, in which the pivoting axis (A) of the hinge extends parallel to the transverse axis (Y) of the vehicle, the base (20) of the fixed hinge knuckle (2) extends substantially horizontally, the orifice (35) is arranged in a substantially vertical wall (33) of the moving hinge knuckle (3) and the tab (23) projects vertically from the base (20) of the moving hinge knuckle (3).
